# EUROPÄISCHE PATENTANMELDUNG

(11) **EP 3 480 669 A1**
(43) Veröffentlichungstag der Anmeldung: **08.05.2019**
(21) Anmeldenummer: 17199913.9
(22) Anmeldetag: 03.11.2017
(51) Int. Cl.: G05B 19/23, G05B 19/401, G01B 21/04

(54) **VERBESSERTE KALIBRIERUNG VON WERKZEUGMASCHINEN**

(71) Anmelder: Siemens Aktiengesellschaft, 80333 München (DE)
(72) Erfinder: Forster, Frank, 81739 München (DE); Smolka, Karl-Heinz, 09120 Chemnitz (DE); Uhlich, Andreas, 90530 Wendelstein (DE)

(57) **Zusammenfassung**

In einem Normalbetrieb einer Werkzeugmaschine werden in der Werkzeugmaschine ein Werkstück (2) und ein Werkzeug (3) fixiert. Lagegeregelten Achsen (5) werden Folgen von resultierenden Lagesollwerten (x*, y*, z*) vorgegeben und so das Werkzeug (3) relativ zum Werkstück (2) lagegeregelt positioniert. Die resultierenden Lagesollwerte (x*, y*, z*) sind durch eine ideale Sollpositionierung (P*) des Werkzeugs (3) relativ zum Werkstück (2) und eine zugehörige, auf die jeweilige ideale Sollpositionierung (P*) bezogene jeweilige Kompensation (K) bestimmt. In einem Kalibrierbetrieb der Werkzeugmaschine werden in der Werkzeugmaschine eine Referenzstruktur (11) mit Referenzkörpern (13) bekannter Geometrie und eine Abtasteinrichtung (12) fixiert. Die Abtasteinrichtung (12) wird mittels der lagegeregelten Achsen (5) zu vielen Istpositionierungen (P) verfahren (bewegt). Dort wird mittels der Abtasteinrichtung (12) jeweils zumindest ein Teil der Kontur mindestens eines der Referenzkörper (13) erfasst. Die jeweilige Istpositionierung (P) des Werkzeughalters (4) relativ zum Werkstückhalter (1) wird ebenfalls erfasst. Die Istpositionierungen (P) sind derart bestimmt, dass insgesamt die Konturen der Referenzkörper (13) erfasst werden. Anhand der erfassten Konturen der Referenzkörper (13) und der zugehörigen Istpositionierungen (P) in Verbindung mit den bekannten Geometrien der Referenzkörper (13) wird für die Orte der Referenzkörper (13) jeweils ein Positionierungsfehler (δP) ermittelt, um den eine tatsächliche Positionierung des Werkzeugs (3) relativ zum Werkstück (2) von der jeweils erfassten Istpositionierung (P) abweicht. Anhand der ermittelten Positionierungsfehler (δP) werden für Stützstellen (Pi*) der Sollpositionierung (P*) die Kompensationswerte (Ki) ermittelt, anhand derer im Normalbetrieb die Kompensation (K) ermittelt wird.

## Beschreibung

Die vorliegende Erfindung geht aus von einem Betriebsverfahren für eine Werkzeugmaschine,
- wobei in einem Normalbetrieb der Werkzeugmaschine
   -- in der Werkzeugmaschine ein Werkstück fixiert wird,
   -- in der Werkzeugmaschine ein Werkzeug fixiert wird und
   -- einer Anzahl von lagegeregelten Achsen der Werkzeugmaschine jeweils eine Folge von resultierenden Lagesollwerten vorgegeben wird, so dass das Werkzeug relativ zum Werkstück lagegeregelt positioniert wird,
- wobei die jeweiligen resultierenden Lagesollwerte durch eine ideale Sollpositionierung des Werkzeugs relativ zum Werkstück und eine zugehörige, auf die jeweilige ideale Sollpositionierung bezogene jeweilige Kompensation bestimmt sind.

Die vorliegende Erfindung geht weiterhin aus von einem Computerprogramm, das Maschinencode umfasst, der von einer Steuereinrichtung einer Werkzeugmaschine unmittelbar abarbeitbar ist, wobei die Abarbeitung des Maschinencodes durch die Steuereinrichtung bewirkt, dass die Steuereinrichtung die Werkzeugmaschine gemäß einem derartigen Betriebsverfahren betreibt.

Die vorliegende Erfindung geht weiterhin aus von einer Steuereinrichtung einer Werkzeugmaschine, wobei die Steuereinrichtung mit einem derartigen Computerprogramm programmiert ist, so dass sie die Werkzeugmaschine gemäß einem derartigen Betriebsverfahren betreibt.

Die vorliegende Erfindung geht weiterhin aus von einer Werkzeugmaschine,
- wobei in einem Normalbetrieb der Werkzeugmaschine in der Werkzeugmaschine ein Werkstück fixiert wird,
- wobei in der Werkzeugmaschine im Normalbetrieb ein Werkzeug fixiert wird,
- wobei die Werkzeugmaschine eine Anzahl von lagegeregelten Achsen aufweist, mittels derer im Normalbetrieb das Werkzeug relativ zum Werkstück lagegeregelt positionierbar ist,
- wobei die Werkzeugmaschine eine derartige Steuereinrichtung aufweist.

Werkzeugmaschinen sind Maschinen mit lagegeregelten Achsen, mittels derer in einem Normalbetrieb ein Werkzeug relativ zu einem zu bearbeitenden Werkstück entlang einer vordefinierten Bahn positioniert wird. Die Anzahl an Achsen beträgt in der Regel mindestens drei. Es sind aber auch Werkzeugmaschinen mit mehr oder weniger als drei lagegeregelten Achsen bekannt. Den lagegeregelten Achsen wird eine entsprechende Sequenz von Lagesollwerten vorgegeben, wobei die für einen bestimmten Zeitpunkt gültigen Lagesollwerte zusammen zumindest die Position, in vielen Fällen auch die Orientierung des Werkzeugs relativ zum Werkstück festlegen.

Die Positionierung ist in der Regel relativ genau. Insbesondere liegt der Positionierungsfehler bei translatorischen Fehlern in aller Regel im Submillimeterbereich und bei rotatorischen Fehlern unter 0,1°. Für manche Fertigungsaufgaben ist diese Genauigkeit jedoch noch nicht genau genug. Insbesondere können beispielsweise aufgrund von Fertigungstoleranzen beim Herstellen der Werkzeugmaschine, thermischen Ausdehnungen oder sonstigen Ursachen Ungenauigkeiten im Mikrometerbereich oder Winkelminutenbereich auftreten. Für manche hochgenaue Fertigungsaufgaben sind auch derart kleine Ungenauigkeiten nicht tolerierbar. Es besteht daher die Notwendigkeit, auch derart geringe Abweichungen korrigieren und kompensieren zu können.

Im Stand der Technik ist bekannt, für Stützstellen des Fahrbereichs der Achsen jeweilige Kompensationswerte zu speichern, welche den ein- oder mehrdimensionalen Positionierungsfehler charakterisieren. Ausgehend von der eigentlichen (idealen) Sollpositionierung, wie sie beispielsweise durch ein Teileprogramm bestimmt ist, wird dann unter Verwendung der Kompensationswerte eine Kompensation ermittelt, welche den Lagefehler korrigiert. Anhand der Sollpositionierung und der Kompensation werden sodann resultierende Lagesollwerte für die lagegeregelten Achsen ermittelt. Zwischen den einzelnen Stützstellen erfolgt in der Regel eine lineare Interpolation. Mittels derartiger Vorgehensweisen können beispielsweise ein etwaiger Durchhang, aber auch andere translatorische und/oder rotatorische Positionierungsfehler korrigiert werden.

Zum Ermitteln der Kompensationswerte an den Stützstellen des Fahrbereichs der Achsen ist es im Stand der Technik erforderlich, das Werkzeug relativ zum Werkstück an den Stützstellen zu positionieren und jeweils durch eine hochgenaue Vermessung der Werkzeugmaschine den Positionierungsfehler zu ermitteln. Diese Vorgehensweisen sind kostspielig und aufwendig. Insbesondere bewegen sich die Kosten für die erforderliche Messeinrichtung oftmals im Bereich oberhalb von 100.000 Euro.

Die Aufgabe der vorliegenden Erfindung besteht darin, Möglichkeiten zu schaffen, mittels derer auf einfache und kostengünstige, aber dennoch zuverlässige Weise die Ermittlung der Positionierungsfehler, seien sie translatorischer oder rotatorischer Natur, möglich ist.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren der eingangs genannten Art dadurch ausgestaltet,
- dass in einem Kalibrierbetrieb der Werkzeugmaschine
   -- in der Werkzeugmaschine eine Referenzstruktur fixiert wird, die eine Anzahl an Referenzkörpern mit bekannter Geometrie aufweist,
   -- in der Werkzeugmaschine eine Abtasteinrichtung fixiert wird,
   -- die Abtasteinrichtung mittels der lagegeregelten Achsen an eine Vielzahl von Istpositionierungen relativ zur Referenzstruktur verfahren (bewegt) wird und dort mittels der Abtasteinrichtung jeweils zumindest ein Teil der Kontur mindestens eines der Referenzkörper erfasst wird und
   -- die jeweilige Istpositionierung beim Erfassen des jeweiligen Teils der jeweiligen Kontur erfasst wird,
- dass die Vielzahl von Istpositionierungen derart bestimmt ist, dass an der Gesamtheit von Istpositionierungen die Konturen der Referenzkörper erfasst werden,
- dass anhand der erfassten Konturen der Referenzkörper und der zugehörigen Istpositionierungen in Verbindung mit den bekannten Geometrien der Referenzkörper für die Orte der Referenzkörper jeweils ein Positionierungsfehler ermittelt wird, um den eine tatsächliche Positionierung der Abtasteinrichtung relativ zur Referenzstruktur von der jeweils erfassten Istpositionierung abweicht,
- dass anhand der ermittelten Positionierungsfehler für Stützstellen der Sollpositionierung zugehörige Kompensationswerte ermittelt werden und
- dass im Normalbetrieb die jeweilige Kompensation anhand der Kompensationswerte ermittelt wird.

Kern der vorliegenden Erfindung ist also, im Kalibrierbetrieb mittels einer - vorzugsweise als Ersatz für das Werkzeug - in der Werkzeugmaschine befestigten Abtasteinrichtung vorbekannte Referenzkörper zu vermessen, die an einer fixen Anbaustelle in der Werkzeugmaschine - vorzugsweise als Ersatz für das Werkstück - angeordnet sind. Aufgrund des Umstands, dass die Referenzkörper bekannt sind, ist es nicht erforderlich, die einzelnen Messungen hochgenau durchzuführen. Vielmehr kann der Ort des jeweiligen Referenzkörpers anhand vieler einzelner Messungen durch einen best-fit der erfassten Konturen mit der bekannten Geometrie des jeweiligen Referenzkörpers hochgenau bestimmt werden.

Minimal beträgt die Anzahl an Referenzkörpern der Referenzstruktur 1. In den meisten Fällen ist es jedoch von Vorteil, wenn die Anzahl an Referenzkörpern der Referenzstruktur größer als 1 ist. In diesem Fall ist zusätzlich zur Geometrie der einzelnen Referenzkörper vorzugsweise auch die Anordnung der Referenzkörper relativ zueinander innerhalb der Referenzstruktur bekannt. Dadurch ergibt sich zum einen eine Fehlertoleranz, zum anderen können mittels eines einzelnen Messdurchgangs für mehrere Stützstellen die Kompensationswerte ermittelt werden, nämlich für so viele Stützstellen wie Referenzkörper vorhanden sind. Dadurch ist die Kalibrierung schneller und genauer durchführbar.

Vorzugsweise sind die Referenzkörper der Referenzstruktur mindestens zweidimensional angeordnet. Dadurch ergibt sich eine noch schnellere und genauere Kalibrierung.

Vorzugsweise sind die Referenzkörper innerhalb der Referenzstruktur derart angeordnet, anhand der Orte der Referenzkörper ein Nullpunkt der Referenzstruktur ermittelbar ist.

Die Referenzkörper können in der Regel durch den Ort beispielsweise ihres Schwerpunkts und durch jeweilige weitere Parameter beschrieben werden. Die weiteren Parameter können nach Bedarf bestimmt sein. Im Ergebnis müssen sie jedoch den jeweiligen Referenzkörper eindeutig definieren. Beispielsweise bei einer Kugel ist nur ein einziger weiterer Parameter erforderlich, nämlich der Radius. Bei einem Würfel sind vier weitere Parameter erforderlich, nämlich die Kantenlänge und die Orientierung des Würfels im Raum. Aufgrund der erfindungsgemäßen Vorgehensweise ist es möglich, dass die Parameter durch statistische Auswertung der erfassten Konturen ermittelt werden.

Die Referenzkörper sind vorzugsweise elementargeometrische Figuren. Beispiele derartiger Figuren sind eine Kugel, ein Kegel, ein Kegelstumpf, ein Zylinder, eine Pyramide, ein Pyramidenstumpf oder ein Prisma. Auch ein Quader oder ein Würfel sind möglich.

Die Abtasteinrichtung ist vorzugsweise als Linienlaser ausgebildet. Eine derartige Abtasteinrichtung ist zuverlässig und kostengünstig.

Die Aufgabe wird weiterhin durch ein Computerprogramm mit den Merkmalen des Anspruchs 8 gelöst. Erfindungsgemäß bewirkt die Abarbeitung des Maschinencodes durch die Steuereinrichtung, dass die Steuereinrichtung die Werkzeugmaschine gemäß einem erfindungsgemäßen Betriebsverfahren betreibt.

Die Aufgabe wird weiterhin durch eine Steuereinrichtung einer Werkzeugmaschine mit den Merkmalen des Anspruchs 9 gelöst. Erfindungsgemäß ist die Steuereinrichtung mit einem erfindungsgemäßen Computerprogramm programmiert, so dass sie die Werkzeugmaschine gemäß einem erfindungsgemäßen Betriebsverfahren betreibt.

Die Aufgabe wird weiterhin durch eine Werkzeugmaschine mit den Merkmalen des Anspruchs 10 gelöst. Erfindungsgemäß ist eine Werkzeugmaschine der eingangs genannten Art dadurch ausgestaltet,
- dass in einem Kalibrierbetrieb der Werkzeugmaschine in der Werkzeugmaschine eine Referenzstruktur fixiert wird, die eine Anzahl an Referenzkörpern mit bekannter Geometrie aufweist,
- dass im Kalibrierbetrieb in der Werkzeugmaschine eine Abtasteinrichtung fixiert wird, mittels derer die Konturen der Referenzkörper erfassbar sind,
- dass mittels der lagegeregelten Achsen im Kalibrierbetrieb die Abtasteinrichtung relativ zur Referenzstruktur lagegeregelt positionierbar ist und
- dass die Steuereinrichtung der Werkzeugmaschine erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine und wesentliche Komponenten der Werkzeugmaschine,
- FIG 2: ein Ablaufdiagramm,
- FIG 3: einen Werkstückhalter mit einer Referenzstruktur von oben,
- FIG 4: die Referenzstruktur von FIG 3 perspektivischer Ansicht,
- FIG 5: ein Ablaufdiagramm,
- FIG 6: einen Referenzkörper und eine Abtasteinrichtung von der Seite,
- FIG 7: den Referenzkörper und die Abtasteinrichtung FIG 6 von oben und
- FIG 8: eine Abtastung einer einzelnen Zeile.

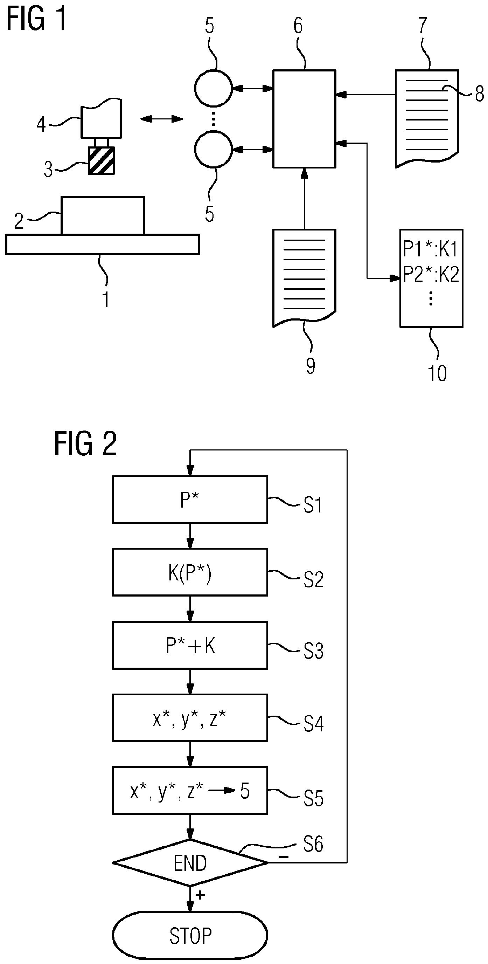

Gemäß FIG 1 weist eine Werkzeugmaschine einen Werkstückhalter 1 auf. In dem Werkstückhalter 1 wird in einem Normalbetrieb der Werkzeugmaschine ein Werkstück 2 fixiert, das mittels eines Werkzeugs 3 der Werkzeugmaschine bearbeitet werden soll. Der Werkstückhalter 1 kann beispielsweise als Werkzeugtisch ausgebildet sein. Er kann beispielsweise um eine vertikale Achse drehbar sein. Die Werkzeugmaschine weist weiterhin einen Werkzeughalter 4 auf. Der Werkzeughalter 4 kann beispielsweise an einem Spindelantrieb angeordnet sein. In dem Werkzeughalter 4 ist im Normalbetrieb das Werkzeug 3 fixiert. Die Werkzeugmaschine weist weiterhin eine Anzahl von lagegeregelten Achsen 5 auf. Mittels der lagegeregelten Achsen ist das Werkzeug 3 relativ zum Werkstück 2 lagegeregelt positionierbar. Die Anzahl an lagegeregelten Achsen 5 beträgt in der Regel mindestens drei. Üblich sind drei, vier oder fünf lagegeregelte Achsen 5. Es sind aber auch Werkzeugmaschinen mit nur zwei lagegeregelten Achsen 5 oder mit mehr als fünf lagegeregelten Achsen 5 bekannt. Es sind sogar Werkzeugmaschinen mit nur einer einzigen lagegeregelten Achsen 5 bekannt.

Die Werkzeugmaschine weist weiterhin eine Steuereinrichtung 6 auf. Die Steuereinrichtung 6 ist mit einem Computerprogramm 7 programmiert, das die Wirkungsweise der Steuereinrichtung 6 und damit der Werkzeugmaschine bestimmt. Das Computerprogramm 7 umfasst Maschinencode 8, der von der Steuereinrichtung 6 unmittelbar abarbeitbar ist. Die Programmierung der Steuereinrichtung 6 mit dem Computerprogramm 7 bzw. konkreter die Abarbeitung des Maschinencodes 8 durch die Steuereinrichtung 6 bewirkt, dass die Steuereinrichtung 6 die Werkzeugmaschine gemäß einem Betriebsverfahren betreibt, das nachstehend näher erläutert wird.

Die Werkzeugmaschine ist, wie bereits erwähnt, zunächst in einem Normalbetrieb betreibbar. Weiterhin ist die Werkzeugmaschine aber auch in einem Kalibrierbetrieb betreibbar. Nachfolgend wird zunächst in Verbindung mit den FIG 1 und 2 der Normalbetrieb erläutert.

Im Normalbetrieb sind, wie ebenfalls bereits erwähnt, in dem Werkstückhalter 1 das Werkstück 2 und in dem Werkzeughalter 4 das Werkzeug 3 fixiert. Im Normalbetrieb arbeitet die Steuereinrichtung 6 in der Regel ein sogenanntes Teileprogramm 9 ab. Das Teileprogramm 9 legt die Bearbeitung des Werkstücks 2 durch die Werkzeugmaschine fest. Insbesondere definiert das Teileprogramm 9 eine Bahn und damit eine Abfolge von Positionen (gegebenenfalls auch von Orientierungen) des Werkzeugs 3 relativ zum Werkstück 2. Nachfolgend wird ausschließlich auf die Position eingegangen. Die nachfolgenden Ausführungen sind jedoch auch gültig, wenn zusätzlich oder alternativ zur Position die Orientierung des Werkzeugs 3 relativ zum Werkstück 2 eingestellt wird.

Gemäß FIG 2 wird der Steuereinrichtung 6 in einem Schritt S1 - beispielsweise durch Abarbeitung des Teileprogramms 9 - jeweils eine ideale Sollpositionierung P* des Werkzeugs 3 relativ zum Werkstück 2 bekannt. Die ideale Sollpositionierung P* ist in der Regel auf ein kartesisches, rechtwinkliges Koordinatensystem bezogen. Dies ist im Rahmen der vorliegenden Erfindung jedoch von untergeordneter Bedeutung. In einem Schritt S2 ermittelt die Steuereinrichtung 6 eine jeweilige Kompensation K. Die jeweilige Kompensation K ist auf die jeweilige ideale Sollpositionierung P* bezogen. Beispielsweise kann die Steuereinrichtung 6 Zugriff auf ein Stützstellenfeld 10 haben, in dem für vorbestimmte Stützstellen Pi* (i = 1, 2, ...) der Sollpositionierung P* ein jeweiliger Kompensationswert Ki hinterlegt ist. In diesem Fall kann die Steuereinrichtung 6 anhand des Stützstellenfeldes 10 die jeweils erforderliche Kompensation K ermitteln. Beispielsweise kann die Steuereinrichtung 6 die jeweilige Kompensation K durch lineare Interpolation zwischen den der jeweiligen Sollpositionierung P* benachbarten Stützstellen Pi* des Stützstellenfeldes 10 und den zugehörigen Kompensationswerten Ki ermitteln.

In einem Schritt S3 bestimmt die Steuereinrichtung 6 anhand der idealen Sollpositionierung P* des Werkzeugs 3 relativ zum Werkstück 2 und der zugehörigen Kompensation K eine resultierende Sollpositionierung. Beispielsweise kann die Steuereinrichtung 6 im Schritt S3 die Kompensation K zur jeweiligen idealen Sollpositionierung P* addieren oder die Kompensation K von der jeweiligen idealen Sollpositionierung P* subtrahieren. In einem Schritt S4 ermittelt die Steuereinrichtung 6 anhand der resultierenden Sollpositionierung jeweilige resultierende Lagesollwerte x*, y*, z* für die lagegeregelten Achsen 5. Es ist möglich, dass die jeweiligen Lagesollwerte x*, y*, z* aus der jeweiligen Sollpositionierung x*, y*, z* durch eine kinematische Transformation ermittelt werden müssen. Dies ist im Rahmen der vorliegenden Erfindung jedoch von untergeordneter Bedeutung und wird daher nicht weiter behandelt. Nachfolgend wird stattdessen zur Vereinfachung der Erläuterung der Erfindung angenommen, dass die jeweiligen Lagesollwerte x*, y*, z* mit der jeweiligen resultierenden Sollpositionierung unmittelbar übereinstimmen. Es ist weiterhin möglich, dass die jeweiligen Lagesollwerte x*, y*, z* nicht (nur) die translatorische Position, sondern alternativ oder zusätzlich auch die rotatorische Orientierung festlegen.

In einem Schritt S5 gibt die Steuereinrichtung 6 den lagegeregelten Achsen 5 die jeweils ermittelten resultierenden Lagesollwerte x*, y*, z* vor. Dadurch wird das Werkzeug 3 relativ zum Werkstück 2 lagegeregelt translatorisch und/oder rotatorisch positioniert.

In einem Schritt S6 prüft die Steuereinrichtung 6, ob die Vorgehensweise von FIG 2 beendet werden soll. Wenn dies nicht der Fall ist, geht die Steuereinrichtung 6 zum Schritt S1 zurück, in dem ihr die nächste ideale Sollpositionierung P* bekannt wird.

Diese Vorgehensweise ist als solche bekannt. Der eigentliche Gegenstand der vorliegenden Erfindung ist die Art und Weise, auf welche die Kompensationswerte Ki für die einzelnen Stützstellen Pi* des Stützstellenfeldes 10 ermittelt werden.

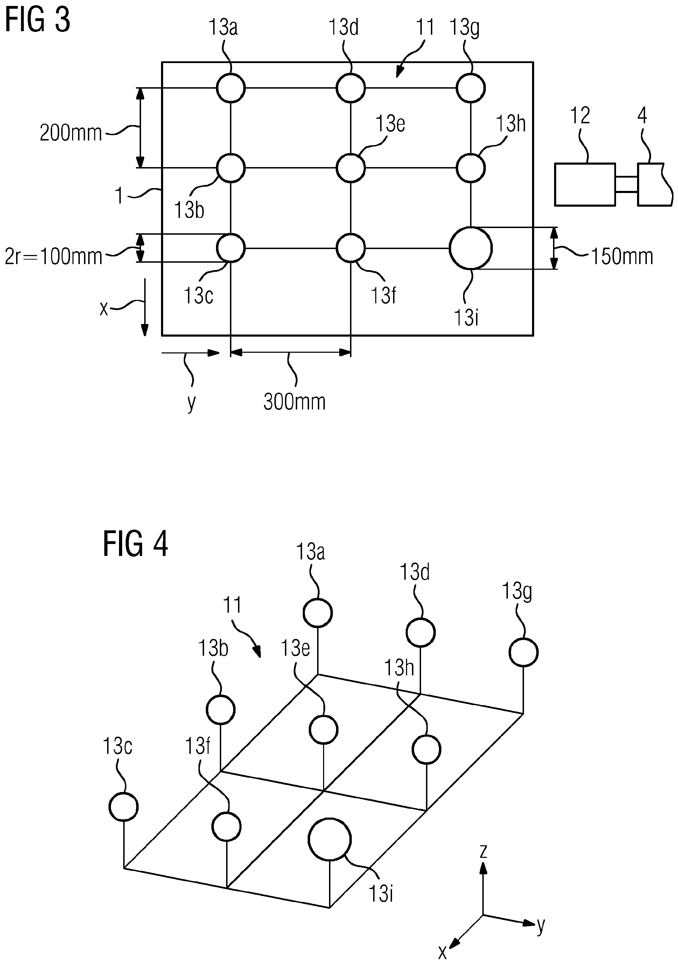

Die Ermittlung der Kompensationswerte Ki für die Stützstellen Pi* des Stützstellenfeldes 10 erfolgt in einem Kalibrierbetrieb der Werkzeugmaschine. Im Kalibrierbetrieb der Werkzeugmaschine wird entsprechend der Darstellung in FIG 3 in dem Werkstückhalter 1 eine Referenzstruktur 11 fixiert. In dem Werkzeughalter 4 wird entsprechend der Darstellung in FIG 3 im Kalibrierbetrieb eine Abtasteinrichtung 12 fixiert. Die Referenzstruktur 11 weist eine Anzahl an Referenzkörpern 13 auf. Die Referenzkörper 13 weisen jeweils eine bekannte Geometrie auf, d.h. eine Geometrie, die der Steuereinrichtung 6 bekannt ist.

Es ist möglich, dass die Referenzstruktur 11 nur einen einzigen Referenzkörper 13 aufweist. Vorzugsweise weist die Referenzstruktur 11 jedoch entsprechend der Darstellung in den FIG 3 und 4 mehrere Referenzkörper 13 auf. Die Referenzkörper 13 sind entsprechend der Darstellung in den FIG 3 und 4 vorzugsweise zweidimensional angeordnet. Sie können sogar dreidimensional angeordnet sein. Im Falle mehrerer Referenzkörper 13 sind der Steuereinrichtung 6 nicht nur die Geometrien der Referenzkörper 13 als solche bekannt, sondern auch die Anordnung der Referenzkörper 13 relativ zueinander, also insbesondere deren Abstände und gegebenenfalls auch Winkel relativ zueinander. Die Referenzkörper 13 sind in den FIG 3 und 4 teilweise zusätzlich mit einem kleinen Buchstaben (a bis i) ergänzt, um sie bei Bedarf voneinander unterscheiden zu können.

Die Referenzkörper 13 sind vorzugsweise elementargeometrische Figuren. Gemäß dem Ausführungsbeispiel sind die Referenzkörper 13 Kugeln. Sie könnten aber auch andersartige elementargeometrische Figuren sein. Beispiele derartiger Figuren sind ein Kegel, ein Zylinder, ein Kegelstumpf, eine Pyramide, ein Pyramidenstumpf oder ein Prisma sowie - als Spezialfälle eines Prismas - ein Quader oder ein Würfel. Derartige elementargeometrische Figuren weisen insbesondere den Vorteil auf, dass sie durch einige wenige jeweilige Parameter beschrieben werden können. Beispielsweise ist eine Kugel bereits durch ihren Radius vollständig beschrieben. Ein Würfel ist durch eine Kantenlänge sowie die Richtungen zweier aneinander angrenzender Kanten des Würfels vollständig beschrieben. Ähnliche, prinzipiell gleichwertige Aussagen gelten für die anderen elementargeometrischen Figuren. Beispielsweise ist ein Zylinder durch seinen Radius, seine Höhe und die Orientierung seiner Symmetrieachse vollständig beschrieben.

Die Referenzkörper 13 können untereinander gleichartig sein. Vorzugsweise aber sind die Referenzkörper 13 innerhalb der Referenzstruktur 11 derart ausgebildet und/angeordnet, dass anhand der Orte der Referenzkörper 13 ein Nullpunkt der Referenzstruktur 11 ermittelbar ist. Beispielsweise kann entsprechend der Darstellung in FIG 3 eine der Kugeln einen anderen Radius aufweisen als die anderen Kugeln. In der Darstellung der FIG 3 und 4 ist dies die Kugel rechts unten. In diesem Fall wird die Ermittlung des Nullpunkts durch die entsprechende Ausbildung der Referenzkörper 13 ermöglicht. Alternativ oder zusätzlich ist es möglich, eine derartige Ermittlung durch die Anordnung der Referenzkörper 13 zu ermöglichen. Beispielsweise kann eine der Kugeln aus einem vorbestimmten Raster, in dem die anderen Kugeln angeordnet sind, herausfallen. Selbstverständlich können diese Maßnahmen auch miteinander kombiniert werden.

Die Abtasteinrichtung 12 kann nach Bedarf ausgebildet sein. Entscheidend ist, dass mittels der Abtasteinrichtung 12 die Konturen der Referenzkörper 13 erfassbar sind. Ein Beispiel einer geeigneten Abtasteinrichtung 12 ist ein Linienlaser.

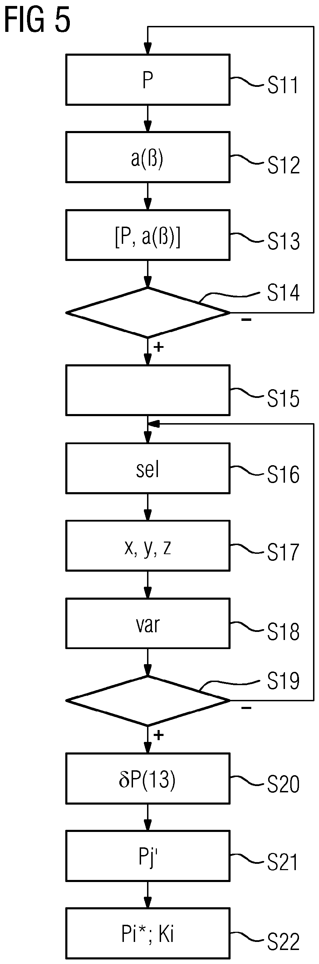

Nachfolgend wird nunmehr in Verbindung mit FIG 5 der Kalibrierbetrieb erläutert.

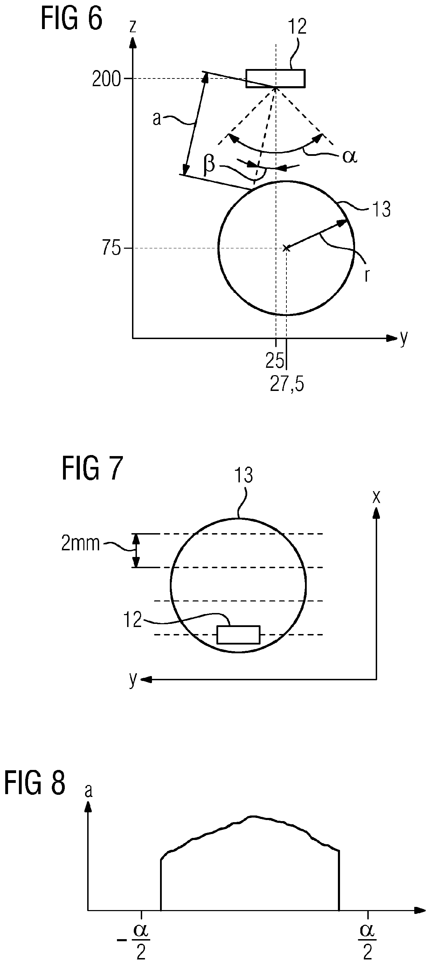

Gemäß FIG 5 wird zunächst in einem Schritt S11 die Abtasteinrichtung 12 relativ zur Referenzstruktur 11 bei einer jeweiligen Istpositionierung P positioniert. Das Positionieren der Abtasteinrichtung 12 relativ zur Referenzstruktur 11 erfolgt durch entsprechende Ansteuerung der lagegeregelten Achsen 5. Bei dieser Istpositionierung P wird sodann in einem Schritt S12 durch entsprechende Ansteuerung der Abtasteinrichtung 12 ein Erfassungsbereich α der Abtasteinrichtung 12 abgetastet. Beispielsweise kann die Abtasteinrichtung 12 entsprechend der Darstellung in den FIG 6 und 7 über einen vorbestimmten Erfassungswinkel α von beispielsweise 90° entlang einer Linie jeweils einen Abstand a zum nächstliegenden Objekt erfassen. FIG 8 zeigt rein beispielhaft eine derartige Abtastung.

Die jeweilige Istpositionierung P, die erfassten Abstände a und die zugehörigen Winkel β werden in einem Schritt S13 von der Steuereinrichtung 6 gespeichert. Die Abstände a werden von der Abtasteinrichtung 12 entlang der Linie in einem relativ engen Raster erfasst, beispielsweise bei jedem vollen Grad, so dass - bei dem gegebenen Beispiel einer Erfassung über einen Erfassungswinkel α von 90° und einer Winkelauflösung von 1° - pro Zeile 90 mal der jeweilige Abstand a erfasst wird. Das entscheidende Kriterium ist, dass durch die Winkelauflösung entsprechend der Darstellung in FIG 6 gewährleistet wird, dass die Referenzkörper 13 über den Erfassungswinkel α jeweils an mehreren Stellen abgetastet werden.

In einem Schritt S14 prüft die Steuereinrichtung 6, ob das Verfahren (Bewegen) der Abtasteinrichtung 12 relativ zur Referenzstruktur 11 beendet werden soll. Wenn dies nicht der Fall ist, geht die Steuereinrichtung 6 zum Schritt S11 zurück, in dem sie die Abtasteinrichtung 12 bei der nächsten Istpositionierung P positioniert. Sodann werden die Schritte S12 bis S14 erneut ausgeführt.

Die durch die Schritte S11 bis S14 definierte Schleife wird für eine hinreichend große Vielzahl von Istpositionierungen P wiederholt. Nicht notwendigerweise bei allen, aber zumindest bei einigen der Istpositionierungen P wird jeweils zumindest ein Teil der Kontur zumindest eines der Referenzkörper 13 erfasst. Die Istpositionierungen P sind in ihrer Gesamtheit jedoch derart bestimmt, dass durch die Gesamtheit der Abtastung die Konturen der Referenzkörper 13 erfasst werden.

Die Istpositionierungen P sind weiterhin hinreichend nahe aneinander angeordnet. Beispielsweise können sie entsprechend der Darstellung in FIG 7 orthogonal zur Linie der Abtastung durch die Abtasteinrichtung 12 jeweils um einen Bruchteil der Erstreckung der Referenzkörper 13 bewegt werden, beispielsweise bei einem Radius der als Kugel ausgebildeten Referenzkörper 13 von 50 mm um jeweils 2 mm. Das entscheidende Kriterium ist, dass durch die Auflösung in der Istpositionierung P entsprechend der Darstellung in FIG 7 gewährleistet wird, dass die Referenzkörper 13 bei mehreren Istpositionierungen P jeweils über den Erfassungswinkel α abgetastet werden.

Im Ergebnis wird somit durch die Schritte S11 bis S14 die Kontur der Referenzkörper 13 erfasst. Diese erfassten Konturen werden von der Steuereinrichtung 6 weiter verwertet. Zunächst separiert die Steuereinrichtung 6 in einem Schritt S15 die erfassten Konturen voneinander und ordnet sie jeweils einem der Referenzkörper 13 zu. Dies ist ohne weiteres möglich, auch wenn der genaue Ort der Referenzkörper 13 der Steuereinrichtung 6 zu diesem Zeitpunkt noch nicht bekannt ist. Denn es kommt für die Separierung und Zuordnung nicht darauf an, dass der Steuereinrichtung 6 der genaue Ort der Referenzkörper 13 bekannt ist. Es reicht aus, zu wissen, wo sich die Referenzkörper 13 in etwa befinden. Diese Information kann der Steuereinrichtung 6 ohne weiteres bekannt sein.

In einem Schritt S16 selektiert die Steuereinrichtung 6 sodann einen der Referenzkörper 13 und die zugeordnete Kontur. Sodann setzt die Steuereinrichtung 6 in einem Schritt S17 für den selektierten Referenzkörper 13 Parameter an. Die Parameter umfassen zumindest den Ort des selektierten Referenzkörpers 13, beispielsweise dessen Koordinaten x, y, z, gegebenenfalls auch dessen Orientierung. Beispielsweise kann die Steuereinrichtung 6 im Falle einer Kugel als Ort den Kugelmittelpunkt ansetzen. Sodann variiert die Steuereinrichtung 6 in einem Schritt S18 die Parameter, also insbesondere den Ort des jeweiligen Referenzkörpers 13, bis sich eine möglichst gute Annäherung der Kontur des derart parametrierten Referenzkörpers 13 mit der erfassten Kontur ergibt.

Im einfachsten Fall umfassen die Parameter ausschließlich den Ort des jeweiligen Referenzkörpers 13. In manchen Fällen kann es jedoch erforderlich sein, zusätzlich auch eine Orientierung des Referenzkörpers 13 mit zu parametrieren. Bei einer Kugel ist dies nicht erforderlich, da die Orientierung der Kugel irrelevant ist. Bei einer anderen Ausgestaltung des Referenzkörpers 13 kann dies jedoch erforderlich sein. Die Abmessungen der Referenzkörper 13 müssen jedoch nicht parametriert werden, da diese der Steuereinrichtung 6 vorbekannt sind. Es ist aber möglich, auch die Abmessungen mit zu parametrieren, beispielsweise bei einer Kugel den Radius r. Aufgrund der Erfassung der Kontur des jeweiligen Referenzkörpers 13 an vielen Punkten (sowohl bei einer einzelnen Abtastung im Winkelbereich als auch in einer ganzen Folge von Abtastungen bei verschiedenen Istpositionen P) umfasst die erfasste Kontur eine erheblich größere Anzahl von einzelnen Punkten als zu variierende Parameter (Ort des jeweiligen Referenzkörpers 13, gegebenenfalls dessen Orientierung und eventuell dessen Abmessungen) vorhanden sind. Die Parameter des jeweiligen Referenzkörpers 13 können somit durch eine statistische Auswertung der jeweils erfassten Kontur ermittelt werden. Insbesondere kann für eine bestimmte Parametrierung des jeweiligen Referenzkörpers 13 für jeden Punkt der erfassten Kontur der Abstand zum entsprechend parametrierten Referenzkörper 13 ermittelt werden. Die Parameter des jeweiligen Referenzkörpers 13 können dann durch ein best-fit Kriterium bestimmt sein. Entsprechende Kriterien - beispielsweise Minimierung der Summe der Quadrate der einzelnen Abstände - sind Fachleuten allgemein bekannt.

Im Ergebnis ermittelt die Steuereinrichtung 6 somit anhand der erfassten Kontur des jeweiligen Referenzkörpers 13 und der zugehörigen Istpositionierungen P insbesondere den Ort des jeweiligen Referenzkörpers 13. Diese Ermittlung kann aufgrund der Vielzahl der von mittels der Abtasteinrichtung 12 erfassten Abstände a erheblich genauer sein als die Genauigkeit der einzelnen mittels der Abtasteinrichtung 12 erfassten Abstände a.

In einem Schritt S19 prüft die Steuereinrichtung 6, ob sie bereits für alle Referenzkörper 13 die entsprechenden Parameter ermittelt hat. Wenn dies nicht der Fall ist, geht die Steuereinrichtung 6 zum Schritt S16 zurück, in dem sie einen anderen Referenzkörper 13 selektiert, für den sie die Parameter noch nicht ermittelt hat. Anderenfalls geht die Steuereinrichtung 6 zu einem Schritt S20 über.

Im Schritt S20 ermittelt die Steuereinrichtung 6 für die Orte der Referenzkörper 13 jeweils einen Positionierungsfehler δP. Dies wird nachfolgend in Verbindung mit einem Beispiel und den FIG 8 und 9 näher erläutert.

Die Referenzstruktur 11 als solche ist hochgenau bekannt. Insbesondere sind die einzelnen Referenzkörper 13 und auch deren Anordnung relativ zueinander hochgenau bekannt. Es kann - um ein Zahlenbeispiel zu geben - beispielsweise bekannt sein, dass die Referenzkörper 13 als Kugeln ausgebildet sind, die in einem rechteckigen Raster von 200 x 300 mm angeordnet sind und deren Kugelmittelpunkte 150 mm oberhalb der Unterkante der Referenzstruktur 13 angeordnet sind. Die Kugeln 13a bis 13h können beispielsweise einen Radius von 50 mm aufweisen, die Kugel 13i einen größeren Radius r von beispielsweise 75 mm.

Im Rahmen der Schritte S11 bis S19 wurde jeweils ein Ort für den jeweiligen Referenzkörper 13 ermittelt. Der ermittelte Ort basiert auf den zugehörigen Istpositionierungen P, bei denen die Abtasteinrichtung 12 jeweils positioniert war, und den zugehörigen, mittels der Abtasteinrichtung 12 erfassten Abständen a, d.h. der erfassten Kontur. Aufgrund der erfassten Konturen der Referenzkörper 13 kann sich - basierend insbesondere auf den Istpositionierungen P - für die ermittelten Orte der Referenzkörper 13a bis 13i beispielsweise folgender Sachverhalt ergeben:

| Referenzkörper | x (in mm) | y (in mm) | z (in mm) |
|---|---|---|---|
| | | | |
| 13a | 47,30 | 27,50 | 74,85 |
| 13b | 347,25 | 27,40 | 75,10 |
| 13c | 647,20 | 27,35 | 75,00 |
| 13d | 47,25 | 227,55 | 75,05 |
| 13e | 347,35 | 227,50 | 74,90 |
| 13f | 647,40 | 227,40 | 75,00 |
| 13g | 47,35 | 427,30 | 74,95 |
| 13h | 347,30 | 427,35 | 75,00 |
| 13i | 647,50 | 427,40 | 75,05 |

Aufgrund des bekannten Abstands der Kugelmittelpunkte vom Werkstückhalter 1 (im gegebenen Beispiel 75 mm) ist der Fehler in der z-Koordinate für alle Referenzkörper 13 ermittelbar. Unter Umständen (nämlich dann, wenn eine absolute Positionierung der Referenzstruktur 11 in der xy-Ebene eindeutig definiert ist oder ermittelbar ist) kann weiterhin auch für alle Referenzkörper 13 der Fehler in der xy-Ebene ermittelt werden. Zumindest aber ist es möglich, einen der Referenzkörper 13 als Referenz zu verwenden und die Fehler in der xy-Ebene für die anderen Referenzkörper 13 auf diesen einen Referenzkörper 13 zu beziehen. Ohne Beschränkung der Allgemeinheit wird nachfolgend angenommen, dass es sich bei dem einen Referenzkörper 13 um den Referenzkörper 13a handelt. In diesem Fall können die Positionierungsfehler δP - nachfolgend aufgelöst in die Fehler δx in x-Richtung, δy in y-Richtung und 5z in z-Richtung - wie folgt ermittelt werden:

| Referenzkörper | x (in mm) | y(in mm) | z(in mm) |
|---|---|---|---|
| | | | |
| 13a | ± 0,00 | ± 0,00 | - 0,15 |
| 13b | - 0,05 | - 0,10 | + 0,10 |
| 13c | - 0,10 | - 0,15 | ± 0,00 |
| 13d | - 0,05 | + 0,05 | + 0,05 |
| 13e | + 0,05 | ± 0,00 | - 0,10 |
| 13f | + 0,10 | - 0,10 | ± 0,00 |
| 13g | + 0,05 | - 0,20 | - 0,05 |
| 13h | ± 0,00 | - 0,15 | ± 0,00 |
| 13i | + 0,20 | - 0,10 | + 0,05 |

Die im Schritt S20 ermittelten Positionierungsfehler δP sind zunächst auf den jeweiligen Referenzkörper 13 bezogen. Ursache der ermittelten Positionierungsfehler δP ist, dass die der Ermittlung zugrundeliegenden tatsächlichen Positionierungen der Abtasteinrichtung 12 relativ zur Referenzstruktur 11 von der erfassten Istpositionierung P abgewichen sind.

Die ermittelten Positionierungsfehler δP müssen nun geeigneten Stützstellen Pi* des Stützstellenfeldes 10 zugeordnet werden. Die Steuereinrichtung 6 ermittelt daher in einem Schritt S21 zunächst entsprechende vorläufige Stützstellen Pj', die auf die Positionierung der Abtasteinrichtung 12 relativ zur Referenzstruktur 11 bezogen sind. Zu diesem Zweck ermittelt die Steuereinrichtung 6 anhand der Istpositionierungen P, die für die Ermittlung der Kontur des jeweiligen Referenzkörpers 13 verwendet wurden, die Koordinaten der entsprechenden vorläufigen Stützstelle Pj'. Dies wird nachfolgend in Verbindung mit einem Beispiel und den FIG 6 und 7 näher erläutert.

Es wird nachfolgend angenommen, dass die Abtasteinrichtung 12 zum Erfassen der Konturen der Referenzkörper 13a, 13b und 13c relativ zur Referenzstruktur 11 entsprechend der Darstellung in FIG 7 in Schritten von 2 mm in x-Richtung von x = 0 mm bis x = 750 mm fortbewegt wurde, wobei die y-Koordinate konstant bei einem Wert in der Nähe von 27,50 mm gehalten wurde, beispielsweise entsprechend der Darstellung in FIG 7 bei y = 25 mm. Die z-Koordinate wurde konstant bei einem Wert oberhalb von 150 mm gehalten, beispielsweise entsprechend der Darstellung in FIG 6 bei z = 200 mm. In analoger Weise wurde die Abtasteinrichtung 12 zum Erfassen der Konturen der Referenzkörper 13d, 13e und 13f relativ zur Referenzstruktur 11 in Schritten von 2 mm in x-Richtung von x = 0 mm bis x = 750 mm fortbewegt, wobei die y-Koordinate konstant bei einem Wert in der Nähe von 227,50 mm gehalten wurde, beispielsweise bei y = 225 mm. Die z-Koordinate wurde wie zuvor konstant bei einem Wert oberhalb von 150 mm gehalten, beispielsweise bei z = 200 mm. In analoger Weise wurde die Abtasteinrichtung 12 zum Erfassen der Konturen der Referenzkörper 13g, 13h und 13i relativ zur Referenzstruktur 11 in Schritten von 2 mm in x-Richtung von x = 0 mm bis x = 750 mm fortbewegt, wobei die y-Koordinate konstant bei einem Wert in der Nähe von 427,50 mm gehalten wurde, beispielsweise bei y = 425 mm. Die z-Koordinate wurde wie zuvor konstant bei einem Wert oberhalb von 150,00 mm gehalten, beispielsweise bei z = 200 mm. Die Abtasteinrichtung 12 ist derart orientiert gewesen, dass sie jeweils eine Abtastung in einer zur x-Richtung orthogonalen Ebene vorgenommen hat.

Bei diesem Sachverhalt wird beispielsweise der Referenzkörper 13a erfasst bei erfassten = gemessenen Istpositionierungen P, deren x-Koordinaten 22 mm, 24 mm, 26 mm usw. bis 72 mm. Die y-Koordinate der Istpositionierungen P ist jeweils y = 25 mm. Die tatsächlichen Positionierungen können von den erfassten Istpositionierungen P jeweils um einen Positionierungsfehler δP abweichen. Genau genommen kann der Positionierungsfehler δP bei jeder einzelnen Erfassung, also für jede einzelne Istpositionierung P, einen anderen Wert aufweisen. Es kann jedoch vernünftigerweise angenommen werden, dass der Positionierungsfehler δP sich nur relativ langsam ändert. Es kann daher angenommen werden, dass der Positionierungsfehler δP beispielsweise im Intervall von x = 22 bis x = 72 bei y = z = konstant im Wesentlichen derselbe ist. Es ist daher möglich, als jeweilige vorläufige Stützstelle einen gewichteten oder ungewichteten Mittelwert der zur Ermittlung der jeweiligen Kontur verwerteten Istpositionierungen P als vorläufige Stützstelle heranzuziehen. Konkret ergibt sich bei der Verwendung eines ungewichteten Mittelwerts in dem gegebenen Beispiel für den Referenzkörper 13a die vorläufige Stützstelle x = 47 mm, y = 25 mm und z = 200 mm. In analoger Weise kann für die anderen Referenzkörper 13b bis 13i vorgegangen werden. Somit kann eine Gesamtheit der vorläufigen Stützstellen Pj' ermittelt werden. Auf diese vorläufigen Stützstellen Pj' sind die ermittelten Positionierungsfehler δP 1:1 bezogen.

Schließlich ermittelt die Steuereinrichtung 6 in einem Schritt S22 anhand der ermittelten vorläufigen Stützstellen Pj' und der zugehörigen Positionierungsfehler δP die Kompensationswerte Ki für die Stützstellen Pi* des Stützstellenfeldes 10. Beispielsweise kann die Steuereinrichtung 6 im Schritt S22 die ermittelten vorläufigen Stützstellen Pj' direkt als Stützstellen Pi* des Stützstellenfeldes 10 verwenden. In diesem Fall kann die Steuereinrichtung 6 die ermittelten Positionierungsfehler δP direkt den zugehörigen Stützstellen Pi* des Stützstellenfeldes 10 als Kompensationswerte Ki zuordnen. Alternativ ist es möglich, dass die Steuereinrichtung 6 durch lineare oder nichtlineare Interpolation der ermittelten Positionierungsfehler δP zwischen den vorläufigen Stützstellen Pj' für vorbestimmte Stützstellen Pi* des Stützstellenfeldes 10 die zugehörigen Kompensationswerte Ki ermittelt und die so ermittelten Kompensationswerte Ki den vorbestimmten Stützstellen Pi* zuordnet.

Die obenstehend erläuterte Vorgehensweise kann auf verschiedene Art und Weise erweitert werden. Beispielsweise ist es möglich, die beschriebene Vorgehensweise für mehrere Ebenen zu wiederholen, beispielsweise für z = 200 mm, z = 300 mm, z = 400 mm usw. Hierbei ist es weiterhin möglich, die Referenzstruktur 11 völlig ortsfest zu lassen. Alternativ ist es beispielsweise möglich, in dem Werkstückhalter 1 nach Bedarf zunächst eine oder mehrere Zwischenplatten mit exakt definierter Dicke von beispielsweise 50 mm, 100 mm usw. einzubringen und erst danach die Referenzstruktur 11 einzubringen. Dadurch ist unter Umständen eine genauere Erfassung der Positionierungsfehler δP möglich. Auch ist es möglich, andere Arten und Weisen für die einmalige Erfassung der Konturen der Referenzkörper 13 zu verwenden.

Falls die Referenzstruktur 11 hinreichend viele Referenzkörper 13 aufweist, kann es weiterhin möglich sein, anhand der für die Referenzkörper 13 ermittelten Orte zunächst eine Orientierung der Referenzstruktur 11 zu ermitteln und erst nach der Ermittlung der Orientierung der Referenzstruktur 11 die Positionierungsfehler δP zu ermitteln.

Zusammengefasst betrifft die vorliegende Erfindung somit folgenden Sachverhalt:
In einem Normalbetrieb einer Werkzeugmaschine werden in der Werkzeugmaschine ein Werkstück 2 und ein Werkzeug 3 fixiert. Lagegeregelten Achsen 5 werden Folgen von resultierenden Lagesollwerten x*, y*, z* vorgegeben und so das Werkzeug 3 relativ zum Werkstück 2 lagegeregelt positioniert. Die resultierenden Lagesollwerte x*, y*, z* sind durch eine ideale Sollpositionierung P* des Werkzeugs 3 relativ zum Werkstück 2 und eine zugehörige, auf die jeweilige ideale Sollpositionierung P* bezogene jeweilige Kompensation K bestimmt. In einem Kalibrierbetrieb der Werkzeugmaschine werden in der Werkzeugmaschine eine Referenzstruktur 11 mit Referenzkörpern 13 bekannter Geometrie und eine Abtasteinrichtung 12 fixiert. Die Abtasteinrichtung 12 wird mittels der lagegeregelten Achsen 5 zu vielen Istpositionierungen P verfahren (bewegt). Dort wird mittels der Abtasteinrichtung 12 jeweils zumindest ein Teil der Kontur mindestens eines der Referenzkörper 13 erfasst. Die jeweilige Istpositionierung P der Abtasteinrichtung 12 relativ zur Referenzstruktur 11 wird ebenfalls erfasst. Die Istpositionierungen P sind derart bestimmt, dass insgesamt die Konturen der Referenzkörper 13 erfasst werden. Anhand der erfassten Konturen der Referenzkörper 13 und der zugehörigen Istpositionierungen P in Verbindung mit den bekannten Geometrien der Referenzkörper 13 wird für die Orte der Referenzkörper 13 jeweils ein Positionierungsfehler δP ermittelt, um den eine tatsächliche Positionierung des Werkzeugs 3 relativ zum Werkstück 2 von der jeweils erfassten Istpositionierung P abweicht. Anhand der ermittelten Positionierungsfehler δP werden für Stützstellen Pi* der Sollpositionierung P* die Kompensationswerte Ki ermittelt, anhand derer im Normalbetrieb die Kompensation K ermittelt wird.

Die vorliegende Erfindung weist viele Vorteile auf. Insbesondere ist auf einfache und zuverlässige Weise eine hochgenaue Ermittlung der Positionierungsfehler δP möglich. Die Abtasteinrichtung 12 kann sehr preisgünstig sein (nur wenige 1000 Euro). Der Zeitbedarf ist gering. Weiterhin kann der Ablauf voll automatisiert sein. Die erforderliche Software kann in die Steuereinrichtung 6 der Werkzeugmaschine integriert werden, so dass mit Ausnahme der Referenzstruktur 11 und der Abtasteinrichtung 12 keinerlei zusätzliche Komponenten erforderlich sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Werkzeugmaschine,
- wobei in einem Normalbetrieb der Werkzeugmaschine
-- in der Werkzeugmaschine ein Werkstück (2) fixiert wird,
-- in der Werkzeugmaschine ein Werkzeug (3) fixiert wird und
-- einer Anzahl von lagegeregelten Achsen (5) der Werkzeugmaschine jeweils eine Folge von resultierenden Lagesollwerten (x*, y*, z*) vorgegeben wird, so dass das Werkzeug (3) relativ zum Werkstück (2) lagegeregelt positioniert wird,
- wobei die jeweiligen resultierenden Lagesollwerte (x*, y*, z*) durch eine ideale Sollpositionierung (P*) des Werkzeugs (3) relativ zum Werkstück (2) und eine zugehörige, auf die jeweilige ideale Sollpositionierung (P*) bezogene jeweilige Kompensation (K) bestimmt sind,
- wobei in einem Kalibrierbetrieb der Werkzeugmaschine
-- in der Werkzeugmaschine eine Referenzstruktur (11) fixiert wird, die eine Anzahl an Referenzkörpern (13) mit bekannter Geometrie aufweist,
-- in der Werkzeugmaschine eine Abtasteinrichtung (12) fixiert wird,
-- die Abtasteinrichtung (12) mittels der lagegeregelten Achsen (5) an eine Vielzahl von Istpositionierungen (P) relativ zur Referenzstruktur (11) verfahren (bewegt) wird und dort mittels der Abtasteinrichtung (12) jeweils zumindest ein Teil der Kontur mindestens eines der Referenzkörper (13) erfasst wird und
-- die Istpositionierung (P) beim Erfassen des jeweiligen Teils der jeweiligen Kontur erfasst wird,
- wobei die Vielzahl von Istpositionierungen (P) derart bestimmt ist, dass an der Gesamtheit von Istpositionierungen (P) die Konturen der Referenzkörper (13) erfasst werden,
- wobei anhand der erfassten Konturen der Referenzkörper (13) und der zugehörigen Istpositionierungen (P) in Verbindung mit den bekannten Geometrien der Referenzkörper (13) für die Orte der Referenzkörper (13) jeweils ein Positionierungsfehler (δP) ermittelt wird, um den eine tatsächliche Positionierung der Abtasteinrichtung (12) relativ zur Referenzstruktur (11) von der jeweils erfassten Istpositionierung (P) abweicht,
- wobei anhand der ermittelten Positionierungsfehler (δP) für Stützstellen (Pi*) der Sollpositionierung (P*) zugehörige Kompensationswerte (Ki) ermittelt werden und
- wobei im Normalbetrieb die jeweilige Kompensation (K) anhand der Kompensationswerte (Ki) ermittelt wird.

2. Betriebsverfahren nach Anspruch 1,
**dadurch gekennzeichnet,**
**dass** die Anzahl an Referenzkörpern (13) der Referenzstruktur (11) größer als 1 ist und dass die Anordnung der Referenzkörper (13) relativ zueinander innerhalb der Referenzstruktur (11) bekannt ist.

3. Betriebsverfahren nach Anspruch 2,
**dadurch gekennzeichnet,**
**dass** die Referenzkörper (13) der Referenzstruktur (11) mindestens zweidimensional angeordnet sind.

4. Betriebsverfahren nach Anspruch 2 oder 3,
**dadurch gekennzeichnet,**
**dass** die Referenzkörper (13) innerhalb der Referenzstruktur (11) derart angeordnet sind, anhand der Orte der Referenzkörper (13) ein Nullpunkt der Referenzstruktur (11) ermittelbar ist.

5. Betriebsverfahren nach einem der obigen Ansprüche,
**dadurch gekennzeichnet,**
**dass** die Referenzkörper (13) durch jeweilige Parameter beschrieben werden und dass die Parameter durch statistische Auswertung der erfassten Konturen ermittelt werden.

6. Betriebsverfahren nach einem der obigen Ansprüche,
**dadurch gekennzeichnet,**
**dass** die Referenzkörper (13) elementargeometrische Figuren sind.

7. Betriebsverfahren nach einem der obigen Ansprüche,
**dadurch gekennzeichnet,**
**dass** die Abtasteinrichtung (12) als Linienlaser ausgebildet ist.

8. Computerprogramm, das Maschinencode (8) umfasst, der von einer Steuereinrichtung (6) einer Werkzeugmaschine unmittelbar abarbeitbar ist, wobei die Abarbeitung des Maschinencodes (8) durch die Steuereinrichtung (6) bewirkt, dass die Steuereinrichtung (6) die Werkzeugmaschine gemäß einem derartigen Betriebsverfahren betreibt.

9. Steuereinrichtung einer Werkzeugmaschine, wobei die Steuereinrichtung mit einem Computerprogramm (7) nach Anspruch 8 programmiert ist, so dass sie die Werkzeugmaschine gemäß einem derartigen Betriebsverfahren betreibt.

10. Werkzeugmaschine,
- wobei in einem Normalbetrieb der Werkzeugmaschine in der Werkzeugmaschine ein Werkstück (2) fixiert wird und in einem Kalibrierbetrieb der Werkzeugmaschine in der Werkzeugmaschine eine Referenzstruktur (11) fixiert wird, die eine Anzahl an Referenzkörpern (13) mit bekannter Geometrie aufweist,
- wobei in der Werkzeugmaschine im Normalbetrieb ein Werkzeug (3) und im Kalibrierbetrieb eine Abtasteinrichtung (12) fixiert wird, mittels derer die Konturen der Referenzkörper (13) erfassbar sind,
- wobei die Werkzeugmaschine eine Anzahl von lagegeregelten Achsen (5) aufweist, mittels derer im Normalbetrieb das Werkzeug (3) relativ zum Werkstück (2) und im Kalibrierbetrieb die Abtasteinrichtung (12) relativ zur Referenzstruktur (11) lagegeregelt positionierbar ist,
- wobei die Werkzeugmaschine eine Steuereinrichtung (6) nach Anspruch 9 aufweist.
